# EUROPEAN PATENT SPECIFICATION

(11) **EP 1 056 809 B1**
(45) Date of publication and mention of the grant of the patent: **27.11.2002**
(21) Application number: 99901855.9
(22) Date of filing: 16.02.1999
(51) Int. Cl.: C09C 1/36, C01G 23/08

(54) **PROCESS AND FURNACE FOR THE PRODUCTION OF TiO 2? PIGMENT ACCORDING TO THE SULFATE PROCESS**
VERFAHREN UND OFEN FÜR DIE HERSTELLUNG VON TIO2 PIGMENTE NACH DEM SULFATVERFAHREN
PROCEDE ET FOUR UTILES POUR LA PRODUCTION DE PIGMENTS DE TiO 2? SELON LE PROCEDE AU SULFATE

(30) Priority: 17.02.1998 DE 19806472
(43) Date of publication of application: 06.12.2000
(73) Proprietor: Kerr-McGee Pigments GmbH, 47829 Krefeld (DE)
(72) Inventor: KEMPKENS, Jürgen, D-41539 Dormagen (DE); LAILACH, Günter, D-47799 Krefeld (DE)
(74) Representative: McCluskie, Gail Wilson
(86) International application number: IB9900271
(87) International publication number: WO99041316

(56) References cited:
- EP-A- 0 371 329
- FR-A- 797 908

## Description

The invention relates to a process according to claim 1 for the production of TiO₂ pigment from titanium dioxide hydrate with very low sulfur content.

According to the art (Ullmanns Encyclopaedia of Technical Chemistry, 4th Edition, Vol. 18 (1979), pages 574-576), the titanium dioxide hydrate accumulating in the hydrolysis of titanyl sulfate is separated by filtration from the mother liquor, an approximately 25% metal sulfate-containing sulfuric acid. The content of coloring metal ions such as Fe, V, Cr ions is lowered to a minimum by a reducing treatment in diluted acid. After this treatment, characterized as bleaching, the titanium dioxide hydrate still contains approximately 80 kg SO₄²⁻ ions per t TiO₂ which cannot be removed by washing with water. After addition of so-called doping chemicals, different amounts of alkali hydroxide, phosphoric acid and optionally rutile nuclei for controlling the pigment quality, the titanium dioxide hydrate is calcined in a directly heated rotary kiln. Flue gas with a temperature of 1100 to 1400°C and solids are moving counter-currently through the rotary kiln. In the first section of the rotary kiln, the titanium dioxide hydrate is dried. After heating it to approximately 500°C, sulfuric acid, split off by further temperature increase, is partially decomposed in the hot flue gas to SO₂, O₂ and H₂O. The formation of pigment particles into the modifications anatse or rutile finally occurs at 800 to 1100°C.

The rotary kilns are very large apparatuses with respect to through-put capacity, especially because in the first section, requiring approximately 50% of the furnace length, in which the drying of the titanium dioxide hydrate filter cake occurs, the introduction of heat into the product is very ineffective (Dumont, Belanger, Ind. Engn. Chem., Process Des. Dev. 17 (1978), 107-114). The filter cake falling out of the rotary kiln in the region at the feed end must be mashed and returned for filtration. The flue gas emerging from the rotary kiln with approximately 400°C contains TiO₂ dust which is partially converted to pigment, besides SO₂ and sulfuric acid vapor which forms mist as the gas cools. This requires large-scale facilities for dust collecting and reclaiming TiO₂ dust as well as for removing the H₂SO₄ mist and the SO₂ (EP-A 0 320 682). The utilization of the heat energy of the flue gas is technically complicated, especially as a result of the sulfuric acid vapor content (EP-A 476 172, EP-A 0 097 259).

The customary process for the production of titanium dioxide by calcining sulfate-containing titanium dioxide hydrate in rotary kilns is characterized by several disadvantages.

Consequently, the conventional process for production of TiO₂ pigments from titanium dioxide hydrate is characterized by two considerable disadvantages:
- As a result of the coupled execution of the filter cake drying and the solid calcination in one apparatus, the rotary kiln, it is not possible to carry out both of these processes each under optimal conditions.
- As a result of the high content of sulfate ions in the filter cake, an exhaust containing TiO₂ dust, sulfuric acid and SO₂ results whose heat content can only be used in a difficult manner and requires extensive procedures for recovery of the TiO₂ dust and for the removal of the sulfur compounds.

It is known that the performance of the calcining furnace can be increased and the specific energy consumption can be decreased by pre-drying the charged material before a calcination (DE-A 37 25 513, US-A 4 224 288, Kirk-Othmer, Encyclopaedia of Chem. Techn., 3rd Vol. 14 (1981), pages 360-364). However, the described technology cannot be applied to conventional TiO₂ calcination because the sulfuric acid vapor released in the calcining furnace would be condensed in the pre-drier. An internal sulfuric acid circulation with continually increasing amounts of acid would result thereby. A certain increase in the capacity of the facilities can be obtained according to EP-A 0 406 605 in that a portion of the titanium dioxide hydrate filter cake to be calcined is predried with separately produced H₂SO₄ free flue gas and the dried titanium dioxide hydrate is mixed with the residual filter cake before charging in the calcining rotary kiln. Narrow limits are set thereby for the pre-drying by the required crumbly consistency of the mixture. The exhausts from the rotary kiln also require the above described extensive treatment.

An object of the present invention is to provide a process for the production of TiO₂ pigments with high feed rate and low costs which avoid the disadvantages of the art.

This problem is solved in accordance with the invention in that a titanium dioxide hydrate filter cake mixed with doping chemicals which contains less than 3 kg SO₄²⁻ ions per t TiO₂ after a treatment with alkali hydroxide and washing out of the alkali metal sulfate is used as a starting material for the TiO₂ pigment production by calcining titanium dioxide hydrate, this filter cake is dried in a suitable apparatus at 100 to 300°C and subsequently calcined in a rotary kiln at temperatures up to a maximum of 1100°C, preferably 750 to 1100°C, and the exhausts are withdrawn directly into the atmosphere after separation of the TiO₂-containing dust.

The subject matter of the invention is a process for the production of TiO₂ pigments by dissolving titanium raw materials with sulfuric acid, producing a metal sulfate-containing titanyl sulfate solution, hydrolysing the titanyl sulfate, separating the titanium dioxide hydrate from the metal sulfate-containing sulfuric acid by filtration, optional bleaching the titanium dioxide hydrate by reducing treatment in acidic solution, mixing the titanium dioxide hydrate with doping chemicals, and calcining the titanium dioxide hydrate to TiO₂ pigment, characterized in that titanium dioxide hydrate is used as a starting material for the TiO₂ calcining which has less than 3 kg sulfate ions per t TiO₂ after a treatment with alkali hydroxide and washing out the alkali metal sulfate, the filter cake containing the titanium dioxide hydrate and doping chemicals is dried in a solid drier at 100 to 300°C and the dried solid is subsequently calcined in a calcining furnace at temperatures up to 1100°C (solid temperature) to TiO₂ pigments and the exhaust is de-dusted.

Preferably, the SO₄²⁻ content of the titanium dioxide hydrate mixed with adjustment chemicals should obtain the highest value of (x + 0.2) kg/t TiO₂ with x = 2.087 m + 1.2 n, wherein m signifies the Na⁺ content and n signifies the K⁺ content in kg/t TiO₂ in the titanium dioxide hydrate mixed with doping chemicals. Particularly preferred is a sulfate content which is smaller than x kg/t TiO₂.

According to the inventive process, the drying of the titanium dioxide hydrate filter cake mixed with doping chemicals preferably occurs with direct contact between combustion gases and filter cake, wherein the dust-containing exhausts of the calcining furnace and in particular additional flue gas created with a separate burner are used as combustion gases. A further preferred embodiment of the process according to the invention is to de-dust the SO₂-poor, preferably SO₂-free, flue gas emitted from the dryer with 100 to 300°C in a dry manner by filtration or electrostatic gas cleaning and to lead the dust together with the dried filter cake taken from the solid drier to the calcining furnace.

The dried titanium dioxide hydrate can be advantageously compacted before the introduction into the calcining furnace.

Preferably, a fluidized bed drier with or without a stirrer, a spray drier or a flash drier is used as a solid drier which is provided with a feed for dust-containing exhausts from the calcining furnace and a feed for flue gases which are created with a separate burner. Alternatively, the dust from the filter can be advantageously mixed with the titanium dioxide hydrate filter cake mix with doping chemicals before feeding into the drier.

Advantageously, the calcining exhausts and the flue gases can be introduced together into the drier.

A calcining furnace can be used for executing the calcination according to the process of the invention. This calcining furnace is not part of the present invention. The calcining furnace is a rotary kiln whose ratio of length to diameter is in the range of 5 to 10. With conventional TiO₂ furnaces, this ratio is approximately 20. In addition to the ring-shaped weirs on the ends of the rotary kiln, additional ones are preferably installed in a distributed manner over the length of the furnace; 1 to 5 additional weirs are particularly preferred. In order to guarantee the optimal adjustment of the operation parameters with respect to pigment quality, capacity and fuel demand, the rotary kiln according to the invention is preferably equipped with a device for altering the speed of rotation that is variable especially in the range of 0.2 to 1 min⁻¹.

For the separation of dust from the calcining and drying exhaust, dust filters or electrostatic precipitators are preferred whose dust outlet is directly connected with the solid inlet organ of the rotary kiln.

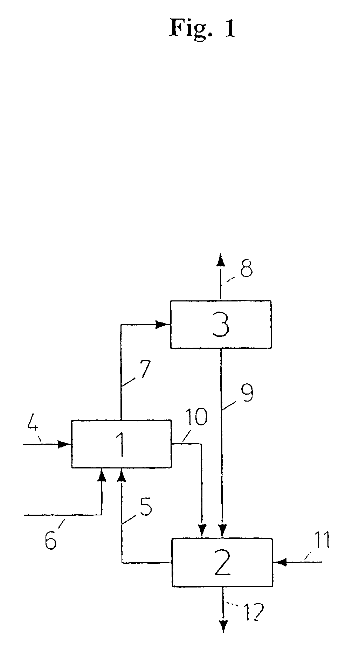

The execution of the process according to the invention in a plant according to the invention is exemplified by means of Fig. 1. Sulfate-poor or sulfate-free titanium dioxide hydrate filter cake provided with adjustment chemicals (4) is introduced into a solid dryer (1). The dust-containing exhaust (5) from the calcining furnace (2) are introduced into this as heating gases. Additionally, flue gases (6) created in a separate burner are introduced. The amount and temperature of the flue gases (6) are adjusted such that a temperature between 100 and 300°C is in the drier (1) and the solid (10) taken out of the drier (1) is consistently and free-flowing.

The flue gases (7) containing dust which emerge with the temperature of 100 to 300°C, preferably 100 to 180°C are de-dusted in an apparatus for dry dust separation (3) preferably a dust filter or an electrostatic precipitator, and are withdrawn into the atmosphere as exhaust (8). The dust (9) containing TiO₂ separated in the dust separator (3) is introduced together with the solid (10) taken from the drier (1) into the calcining furnace (2) at the opposite end for the introduction of heating gas (11).

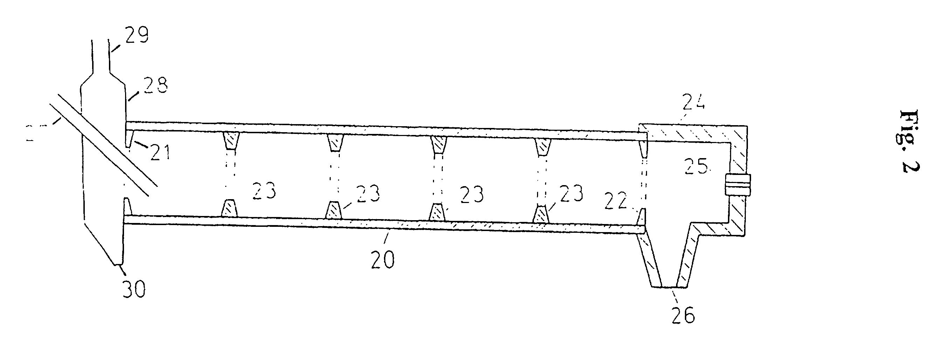

A rotary kiln (Fig. 2) which preferably has a ratio of length to diameter of about 6 is used as a calcining furnace (2) for example. Aside from ring-shaped weirs at the ends, this rotary kiln possess 4 additionally installed weirs which are distributed over the length of the furnace. The TiO₂-containing solid is heated by counter-current flowing flue gases (11) and discharged with a temperature in the range of 750 to 1100°C as TiO₂ pigment (12) into a cooling aggregate.

A preferred embodiment relating an apparatus of the rotary kiln used to carry out the process of the invention is represented in figure 2. The rotary kiln (20) is characterized in that its length for a given throughput capacity is less than 50 % of those conventional rotary kilns for TiO₂ calcining. In addition to the ring shaped weirs on the upper solid feed end of the pipe (21) and on the lower product discharge end (22) four weirs are installed in a distributed manner over the length of the furnace. Heating occurs by means of the burner (25) installed in the combustion chamber (24). The possible introduction of secondary air into the combustion chamber is not shown. The product discharge occurs below (26) at the burner side end. The dried solid containing titanium dioxide hydrate falls into the rotary kiln through the inlet pipe (27). Alternatively, the feeding of the solid can occur by means of a conveying screw or belt. The dust-containing calcining exhausts are led from the gas outlet housing (28) over the line (29) to the solid drier (1). optionally, dust removed in the gas outlet housing (28) can be drawn off over the outlet (30) and led back to the solid feed (27).

The invention offers several advantages.
- Through the use of an extremely sulfate-poor or sulfate-free filter cake instead of the conventional titanium dioxide hydrate filter cake with approximately 80 kg SO₄^{2-/t} TiO₂, the necessity for complicated equipment for removal of H₂SO₄₋ mist and SO₂ of the exhaust of the TiO₂ calcining is omitted.
- By de-coupling the filter cake drying and TiO₂ calcining steps, both processes can be carried out independently from each other in optimized equipment.
- The TiO₂ calcining can be carried out in a rotary kiln optimized for this process which guarantees a tighter residence time spectrum by additional weirs and, therewith, a more uniform product quality.
- As a result of the additional weirs, the speed of rotation of the rotary kiln can be relatively high without considerably shortening the product residence time. As a result, the product surface is more frequently renewed and the temperature difference between heating gas and product can be decreased. This also leads to a uniform product quality.
- Changes in the furnace speed of rotation and the heating gas rate are of considerably less influence on the product residence time than with conventional rotary cylindrical calcining furnaces with simultaneous filter cake drying in the furnace.
- The heat content of the gases escaping from the calcining furnace can be directly used to a temperature of 100°C in the filter cake drying, whereas the exhaust from conventional calcining furnaces must be at least 350°C so that the temperature does not fall below the dew point of H₂SO₄ temperature and a sufficient temperature difference between the gas and filter cake must be maintained for the cake drying in the rotary kiln.
- Whereas filter cake drying and TiO₂ calcining influence each other and prevent an optimal furnace control with the TiO₂ calcining according to the art, the manner of operation of the calcining furnace with the process according to the invention can be optimally coordinated for the required pigment quality.
- As a result of the fact that the filter cake drying has a higher energy requirement than that corresponding to the useful heat content of the calcining exhaust, the constant optimal quality of the dried filter cake can be ensured by means of flue gas from an additional burner.
- The sulfuric acid-free exhaust from drying and calcining do not cause corrosion of the apparatuses such that the separated TiO₂ containing dust can be introduced directly into the calcining furnace without additional cleaning procedures (bleaching).
- The process according to the invention is not only substantially simpler with respect to the apparatus as conventional processes but also permits considerable energy cost savings by optimization of the process.

## Claims

1. Process for the production of TiO₂ pigments by dissolving titanium raw materials with sulfuric acid, producing a metal sulfate-containing titanyl sulfate solution, hydrolysing the titanyl sulfate, separation of the titanium dioxide hydrate from the metal sulfate-containing sulfuric acid by filtration, optional bleaching of the titanium dioxide hydrate by reducing treatment in acidic solution, mixing the titanium dioxide hydrate with doping chemicals, and calcining the titanium dioxide hydrate to TiO₂ pigment, **characterised in that** the titanium dioxide hydrate used as a starting material for the TiO₂ calcining step has less than 3kg sulfate ions per t TiO₂ after a treatment with alkali hydroxide and washing out the alkali metal sulfate, the filter cake containing the titanium dioxide hydrate and doping chemicals is dried in a solid drier at 100 to 300°C and the dried solid is subsequently calcined in a calcining furnace at temperatures up to 1100°C (solidus temperature) to TiO₂ pigments and the exhaust is de-dusted.

2. Process according to claim 1, **characterised in that** the maximal sulfate-content of the titanium dioxide hydrate filter cake mixed with doping chemicals is (x + 0.2) kg/t TiO₂ with x = 2.087 m + 1.2 n, wherein m signifies the Na⁺ content and n the K⁺ in kg/t TiO₂.

3. Process according to claim 1, **characterised in that** the maximal sulfate-content of the titanium dioxide hydrate filter cake mixed with doping chemicals is smaller than x kg/t TiO₂,wherein x has the same meaning as in claim 2.

4. Process according to claim 1, **characterised in that** the gas containing dust escaping from the calcining furnace is introduced into the solid dryer and that the hot dust-containing gases escaping at 100 to 300°C from the solid dryer are de-dusted and withdrawn into the atmosphere.

5. Process according to claim 1, **characterised in that** in addition to the dust-containing exhausts from the calcining furnace, flue gases are introduced into the solid dryer for the filter cake drying step.

6. Process according to claim 1, **characterised in that** the TiO₂-containing dust separated in the exhaust de-dusting are fed into the calcining furnace together with the dried filter cake taken from the solid drier.

7. Process according to claim 1, wherein the calcining furnace for the production of TiO₂ pigments from dried sulfate-poor or sulfate-free titanium dioxide hydrate is in the form of a rotary kiln with a length:diameter ratio in the range of 5 to 10.

8. Process according to claim 7, wherein the rotary kiln contains weirs installed in a distributed manner over the length of the furnace in addition to ring-shaped weirs at the ends of the kiln.

9. Process according to claim 7, wherein from 1 to 5 additional ring-shaped weirs are installed in the rotary kiln.

10. Process according to claim 7, wherein the rotating cylindrical furnace is equipped with a device for changing the speed of rotation.

## Patentansprüche

1. Verfahren zum Herstellen von TiO₂-Pigmenten durch Aufschluß von Titan-Rohstoffen mit Schwefelsäure, Herstellen einer Metallsulfat-haltigen Titanylsulfat-Lösung, Hydrolysieren des Titanylsulfats, Abtrennen des Titandioxidhydrats von der Metallsulfat-haltigen Schwefelsäure durch Filtration, gegebenenfalls Bleichen des Titandioxidhydrats durch reduzierende Behandlung in saurer Lösung, Versetzen des Titandioxidhydrats mit Einstellchemikalien, Kalzinieren des Titandioxidhydrats zum TiO₂-Pigment, **dadurch gekennzeichnet, dass** als Ausgangsstoff für die TiO₂-Kalzinierung Titandioxidhydrat verwendet wird, das nach einer Behandlung mit Alkalihydroxid und dem Auswaschen des Alkalimetallsulfats weniger als 3 kg Sulfationen pro t TiO₂ enthält, dass der dieses Titandioxidhydrat und Einstellchemikalien enthaltende Filterkuchen in einem Feststofftrockner bei 100 bis 300°C getrocknet und der getrocknete Feststoff anschließend in einem Kalzinierofen bei Temperaturen bis 1100°C (Solidus- Temperatur) zu TiO₂-Pigmenten kalziniert wird und dass das Abgas entstaubt wird.

2. Verfahren nach Anspruch 1, **dadurch gekennzeichnet, dass** der maximale Sulfatgehalt des mit Einstellchemikalien versetzten Titandioxidhydrat-Filterkuchens höchstens den Wert (x + 0,2) kg/t TiO₂ erreicht, mit x = 2,087 m + 1,2 n, wobei m den Na⁺-Gehalt und n den K⁺-Gehalt in kg/t TiO₂ bedeutet.

3. Verfahren nach Anspruch 1, **dadurch gekennzeichnet, dass** der maximale Sulfatgehalt des mit Einstellchemikalien versetzten Titandioxidhydrat-Filterkuchens kleiner als x kg/t TiO₂ ist, wobei x die gleiche Bedeutung wie in Anspruch 2 hat.

4. Verfahren nach Anspruch 1, **dadurch gekennzeichnet, dass** die aus dem Kalzinierofen austretenden staubhaltigen Gase in den Feststofftrockner eingeleitet wer- den und dass die aus dem Feststofftrockner austretenden, 100 bis 300°C heißen, staubhaltigen Gase entstaubt und in die Atmosphäre abgeleitet werden.

5. Verfahren nach Anspruch 1, **dadurch gekennzeichnet, dass** zusätzlich zu den staubhaltigen Abgasen aus dem Kalzinierofen Rauchgase in den Feststofftrockner zur Filterkuchen-Trocknung eingeleitet werden.

6. Verfahren nach Anspruch 1, **dadurch gekennzeichnet, dass** die bei der Abgasentstaubung abgeschiedenen TiO₂-haltigen Stäube zusammen mit dem aus dem Feststoff-Trockner ausgetragenen getrockneten Filterkuchen in den Kalzinierofen eingetragen werden.

7. Verfahren nach Anspruch 1, wobei der Calcinierofen zum Herstellen von TiO₂-Pigmenten aus getrocknetem sulfatarmen oder sulfatfreien Titandioxidhydrat in Form eines Drehrohrofens mit einer Länge : DurchmesserVerhältnis im Bereich von 5 bis 10 vorliegt.

8. Verfahren nach Anspruch 7, wobei in den Drehrohrofen außer den ringförmigen Stauwehren an den Ofenenden zusätzliche Stauwehre über die Ofenlänge verteilt eingebaut sind.

9. Verfahren nach Anspruch 7, wobei in den Drehrohrofen 1 bis 5 zusätzliche ringförmige Stauwehre eingebaut sind.

10. Verfahren nach Anspruch 7, wobei der zylindrische Drehrohrofen mit einer Einrichtung zur Veränderung der Umdrehungsgeschwindigkeit ausgerüstet ist.

## Revendications

1. Procédé pour la production de pigments de TiO₂, comprenant les étapes consistant à dissoudre avec de l'acide sulfurique des matières premières contenant du titane, à produire une solution de sulfate de titane contenant un sulfate de métal, à hydrolyser le sulfate de titane, à séparer par filtration l'hydrate de dioxyde de titane de l'acide sulfurique contenant un sulfate de métal, à blanchir éventuellement l'hydrate de dioxyde de titane par un traitement réducteur dans une solution acide, à mélanger l'hydrate de dioxyde de titane avec des agents chimiques de dopage et à calciner l'hydrate de dioxyde de titane pour obtenir un pigment de TiO₂, **caractérisé en ce que** l'hydrate de dioxyde de titane utilisé comme matière initiale pour l'étape de calcination de TiO₂ contient moins de 3 kg d'ions sulfate par t de TiO₂ après un traitement par un hydroxyde alcalin et une élution du sulfate de métal alcalin, le gâteau de filtration contenant l'hydrate de dioxyde de titane et les agents chimiques dopants est séché à une température de 100 à 300°C dans un séchoir pour solides, puis le solide séché est calciné dans un four de calcination à des températures atteignant 1 100°C (température de solidus) pour obtenir des pigments de TiO₂, et les effluents sont dépoussiérés.

2. Procédé selon la revendication 1, **caractérisé en ce que** la teneur maximale en sulfate du gâteau de filtration d'hydrate de dioxyde de titane en mélange avec des agents chimiques dopants est de (x + 0,2) kg/t de TiO₂, la valeur de x étant de 2,087 m + 1,2 n, m désignant la teneur en Na⁺ et n la teneur en K⁺, en kg/t de TiO₂.

3. Procédé selon la revendication 1, **caractérisé en ce que** la teneur maximale en sulfate du gâteau de filtration d'hydrate de dioxyde de titane en mélange avec des agents chimiques dopants est inférieure à x kg/t de TiO₂, x ayant la même signification que dans la revendication 2.

4. Procédé selon la revendication 1, **caractérisé en ce que** les gaz contenant des poussières qui s'échappent du four de calcination sont introduits dans le séchoir pour solides et **en ce que** les gaz chauds contenant des poussières qui s'échappent à une température de 100 à 300°C du séchoir pour solides sont dépoussiérés et rejetés dans l'atmosphère.

5. Procédé selon la revendication 1, **caractérisé en ce qu'**en plus des gaz contenant des poussières rejetés par le four de calcination, des gaz de fumées sont introduits dans le séchoir pour solides en vue de l'étape de séchage du gâteau de filtration.

6. Procédé selon la revendication 1, **caractérisé en ce que** les poussières contenant du TiO₂, séparées lors du dépoussiérage des effluents, sont introduites dans le four de calcination avec le gâteau de filtration séché sorti du séchoir pour solides.

7. Procédé selon la revendication 1, dans lequel le four de calcination pour la production de pigments de TiO₂ à partir d'hydrate de dioxyde de titane séché pauvre en sulfate ou sans sulfate se présente sous la forme d'un four rotatif dont le rapport longueur/diamètre est compris entre 5 et 10.

8. Procédé selon la revendication 7, dans lequel le four rotatif contient des seuils répartis le long du four en plus de seuils annulaires situés aux extrémités du four.

9. Procédé selon la revendication 7, dans lequel entre 1 et 5 seuils annulaires supplémentaires sont installés dans le four rotatif.

10. Procédé selon la revendication 7, dans lequel le four cylindrique rotatif est équipé d'un dispositif pour modifier la vitesse de rotation.
